# EUROPEAN PATENT SPECIFICATION

(11) **EP 4 043 945 B1**
(45) Date of publication and mention of the grant of the patent: **28.08.2024**
(21) Application number: 19948781.0
(22) Date of filing: 26.12.2019
(51) Int. Cl.: G02B 30/56, G02B 5/08

(54) **OPTICAL IMAGE FORMING DEVICE AND METHOD FOR MANUFACTURING SAME**
OPTISCHE BILDERZEUGUNGSVORRICHTUNG UND HERSTELLUNGSVERFAHREN DAFÜR
DISPOSITIF DE FORMATION D'IMAGE OPTIQUE ET SON PROCÉDÉ DE FABRICATION

(30) Priority: 11.10.2019 JP 2019187843
(43) Date of publication of application: 17.08.2022
(73) Proprietor: Asukanet Company, Ltd., Hiroshima-shi, Hiroshima 731-0138 (JP)
(72) Inventor: OTSUBO Makoto, Hiroshima-shi, Hiroshima 731-0138 (JP)
(74) Representative: Vossius & Partner Patentanwälte Rechtsanwälte mbB
(86) International application number: PCT/JP2019/051253
(87) International publication number: WO 2021/070400

(56) References cited:
- EP-A1- 3 118 664
- WO-A1-2009/131128
- WO-A1-2013/179405
- WO-A1-2017/086233
- JP-A- 2015 040 910
- JP-A- 2015 040 910
- JP-A- 2016 004 206
- JP-A- 2017 134 151
- JP-A- 2018 097 311
- JP-A- 2018 128 570
- US-A1- 2015 234 099
- US-A1- 2015 336 340

## Description

### Technical Field

The present invention relates to an optical image forming device including a pair of light control panels having a plurality of light reflecting portions (light reflecting surfaces or mirror surfaces) arranged vertically at equal intervals, with the light control panels being arranged such that the light reflecting portions are orthogonal to each other in planar view, and a method for manufacturing the device.

### Background Art

As a device that forms a stereoscopic image by using light (scattered light) emitted from an object surface, for example, there is an optical image forming device using the light control panels disclosed in patent literature 1. The optical image forming device disclosed in patent literature 1 include a light input side light control panel and a light output side light control panel, each formed by arranging and joining light control segments each having a light reflecting portion on one side of a transparent flat plate having a rectangular cross-section in a planar state. These light control panels are arranged such that the light reflecting portions are orthogonal to each other in planar view. In this manufacturing method, the light input side light control panel and the light output side light control panel are manufactured by stacking transparent plates (for example, glass plates), each having a metal reflecting film forming a light reflecting portion on one side or both sides, by an adhesive agent, and cutting the laminated body at a small width (for example, 0.5 mm to 10 mm).

The optical image forming device disclosed in patent literature 2 is formed by preparing two light control panels each manufactured by forming light reflecting portions on opposing parallel side surfaces of each groove of a transparent concave-convex plate member, with each groove formed by parallel banks and having a rectangular cross-section being formed in one surface of the plate member, and making the respective light reflecting portions face each other in an orthogonal or intersecting state.

### Citation List

### Patent Literature

Patent Literature 1: WO 2009/131128
Patent Literature 2: WO 2015/033645

### Summary of Invention

### Technical Problem

However, in the optical image forming device disclosed in patent literature 1, since many transparent square members on which metal reflecting films are formed are joined to each other by an adhesive agent, variations in the thickness of the adhesive agent cause variations in the distance or parallelism between adjacent light reflecting surfaces. Therefore, there is a problem that distortion is likely to occur in a formed image.

In the optical image forming device disclosed in patent literature 2, it is also difficult to form parallel light reflecting surfaces. In addition, as disclosed in patent literature 2, when the concave-convex plate member of each light control panel is manufactured by injection molding, the vertical angle accuracy of the opposing side surface of each groove deteriorates (each side surface tilts) depending on the dimensional accuracy of the mold form. This may cause a deterioration in production quality and there is a problem that this tendency easily becomes conspicuous when, in particular, a large concave-convex plate member is manufactured.

The present invention has been made in consideration of the above circumstances and has as its object to provide an optical image forming device that can be manufactured at a relatively low cost and forms an image with little distortion and a method for manufacturing the device. Solution to Problem

An optical image forming device according to the first invention in accordance with the object is configured such that glass plate members and transparent resin plate members each having a rectangular cross-section and the same dimensions are alternately stacked on each other, a light reflecting portion is formed between the glass plate member and the resin plate member, a refractive index of the resin plate member falls within a range of 0.9 to 1.1 times (preferably 0.95 to 1.05 times, more preferably 0.98 to 1.02 times; the same applies to the following inventions) a refractive index of the glass plate member, and a light input side light control panel and a light output side light control panel, with the glass plate members on which the light reflecting portions are formed and which are adjacent across the resin plate member being joined to each other by only a resin of the resin plate member, are stacked on each other so as to make the light reflecting portions orthogonal to each other in planar view.

In this case, a hard transparent plate member different from the resin plate member and having a higher melting point than the resin plate member can be used instead of the glass plate member, however, a product with high accuracy can be easily obtained by using the glass plate member.

A method for manufacturing an optical image forming device according to the second invention in accordance with the obj ect includes a laminated body forming process of forming a laminated body by stacking a plurality of transparent plate members, each formed from a glass or hard high-melting resin member having a rectangular shape with a small width and a large length in planar view, while alternately shifting the transparent plate members by a predetermined length in a widthwise direction so as to form protruding portions, a light reflecting portion forming process of forming light reflecting portions on at least opposing surfaces of the adjacent protruding portions, a resin filling process of filling a gap region between the adjacent protruding portion with a transparent resin, a cutting process of cutting the protruding portions integrated by filling the transparent resin on each of both sides of the laminated body to manufacture material members for a pair of light control panels separated from a laminated main body, a planarization process of manufacturing the light control panels by planarizing both end faces of each of the material members in the widthwise direction, and an assembly process of forming an optical image forming device by stacking a pair of the light control panels so as to make the light reflecting portions orthogonal to each other in planar view, wherein the transparent plate member and the transparent resin have refractive indices whose ratio is set within a range of 0.9 to 1.1.

In this case, a resin having a high melting point means a resin having a higher melting point than the transparent resin which fills the gap region between the protruding portions. Accordingly, there is an advantageous effect that the resin which forms the protruding portions is prevented from being melted by filling the protruding portions with such a transparent resin in a liquid form (the same applies to the following inventions) . In addition, a hard resin means a resin that can hold its shape in a solid state unlike a soft resin (for example, a resin that deforms when pressed) (the same applies to the following inventions).

A method for manufacturing an optical image forming device according to the third invention in accordance with the object includes a laminated body forming process of forming a laminated body by preparing a plurality of transparent plate members of two types having different widths, each formed from a glass or hard high-melting resin member having a rectangular shape with a small width and a large length in planar view, and alternately stacking the transparent plate members of the two types while the transparent plate members are aligned on one side in a widthwise direction, with protruding portions being formed on the other side in the widthwise direction, a light reflecting portion forming process of forming light reflecting portions on at least opposing surfaces of the adjacent protruding portions, a resin filling process of filling a gap region between the adjacent protruding portion with a transparent resin, a cutting process of cutting the protruding portions integrated by filling the transparent resin and separating from a laminated main body to manufacture at least one material member for a light control panel, a planarization process of manufacturing the light control panel by planarizing both end faces of the material member in the widthwise direction, and an assembly process of forming the paired light control panels manufactured by sequential execution of the laminated body forming process to the planarization process into an optical image forming device so as to make the light reflecting portions orthogonal to each other in planar view, wherein the transparent plate member and the transparent resin have refractive indices whose ratio is set to 0.9 to 1.1.

A method for manufacturing an optical image forming device according to the fourth invention in accordance with the object includes a laminated body forming process of forming a laminated body by stacking a plurality of transparent plate members, each formed from a glass or hard high-melting resin member having a rectangular shape with a small width and a large length, with a light reflecting portion being formed in advance on all or part of a region, while alternately shifting the transparent plate members by a predetermined length in a widthwise direction so as to form protruding portions, a resin filling process of filling a gap region between the adjacent protruding portion with a transparent resin, a cutting process of cutting the protruding portions integrated by filling the transparent resin on each of both sides of the laminated body to manufacture material members for a pair of light control panels separated from a laminated main body, a planarization process of manufacturing the light control panels by planarizing both end faces of each of the material members in the widthwise direction, and an assembly process of forming an optical image forming device by stacking a pair of the light control panels so as to make the light reflecting portions orthogonal to each other in planar view, wherein part of the region forming the light reflecting portion includes a region serving as an opposing surface of the protruding portion and the transparent plate member and the transparent resin have refractive indices whose ratio is set to 0.9 to 1.1.

A method for manufacturing an optical image forming device according to the fifth invention in accordance with the object includes a laminated body forming process of forming a laminated body by preparing a plurality of transparent plate members of two types having different widths, each formed from a glass or hard high-melting resin member having a rectangular shape with a small width and a large length in planar view, with a light reflecting portion being formed in advance on all or part of a region, and alternately stacking the transparent plate members of the two types while the transparent plate members are aligned on one side in a widthwise direction, with protruding portions being formed on the other side in the widthwise direction, a resin filling process of filling a gap region between the adjacent protruding portion with a transparent resin, a cutting process of cutting the protruding portions integrated by filling the transparent resin and separating from a laminated main body to manufacture at least one material member for a light control panel, a planarization process of manufacturing the light control panel by planarizing both end faces of the material member in the widthwise direction, and an assembly process of forming the paired light control panels manufactured by sequential execution of the laminated body forming process to the planarization process into an optical image forming device so as to make the light reflecting portions orthogonal to each other in planar view, wherein part of the region forming the light reflecting portion includes a region serving as an opposing surface of the protruding portion and the transparent plate member and the transparent resin have refractive indices whose ratio is set to 0.9 to 1.1.

In the above methods for manufacturing the optical image forming device, in the laminated body forming process, the plurality of transparent plate members are preferably joined to each other by an adhesive agent. However, the plurality of transparent plate members stacked on each other can be held in the stacked state with a physical pressing force without using any adhesive agent. In addition, the adhesive agent is preferably placed on a region of the stacking region of each transparent plate member of the laminated body except for both end portions in the widthwise direction. This can prevent the protruding portions from being contaminated with the adhesive agent and suppress the inclination of each light reflecting portion. In this case, an OCA tape can be used as an adhesive agent.

### Advantageous Effects of Invention

The optical image forming device according to the first invention has glass plate members and transparent resin plate members having the same dimensions alternately stacked on each other, with the glass plate members being directly joined to the resin plate members. This eliminates the necessity to use an adhesive agent for joining the glass plate members to the resin plate members. This makes it possible to form an image with no distortion without causing inclination of the light reflecting portions due to the adhesive agent.

In this case, another type of hard transparent plate member having a higher melting point than a resin plate member can be used instead of a glass plate member. However, a product with high accuracy in terms of parallelism, transparency, etc., can be easily obtained by using the glass plate member.

In the method for manufacturing the optical image forming device according to the second to fifth inventions, since a plurality of transparent plate members (including two types of transparent plate members with different widths; the same applies to the following), each formed from a glass or hard high-melting resin member having a rectangular shape with a small width and a large length in planar view, are stacked on each other while protruding portions are formed on one side or both sides in the widthwise direction, the parallelism between the protruding portions formed by the adjacent transparent plate members can be held. In this case, since the transparent plate members stacked on each other have the same thickness, the interval between the protruding portions becomes precisely equal to the thickness of the protruding portion. In addition, since the gap regions between the protruding portions on which the light reflecting portions are formed are filled with the transparent resin, material members for the light control panels can be manufactured without using any adhesive agent.

### Brief Description of Drawings

Fig. 1 is a view for explaining a laminated body forming process in a method for manufacturing an optical image forming device according to an embodiment of the present invention;
Figs. 2(A) and 2(B) are respectively a side view and a front view of a laminated body having undergone a resin filling process in the method for manufacturing the same optical image forming device;
Figs. 3(A) and 3(B) are respectively an enlarged sectional front view and an enlarged sectional side view of the same optical image forming device;
Figs. 4(A) and 4(B) are respectively plan views of the laminated bodies having undergone laminated body forming processes according to the first and second modifications;
Fig. 5 is a view for explaining a laminated body forming process in the method for manufacturing an optical image forming device according to another embodiment of the present invention; and
Figs. 6(A) and 6(B) are respectively a side view and a front view of the laminated body having undergone a resin filling process in the method for manufacturing the same optical image forming device.

### Description of Embodiments

Embodiments of the present invention will be described next with reference to the accompanying drawings to provide for understanding of the present invention.

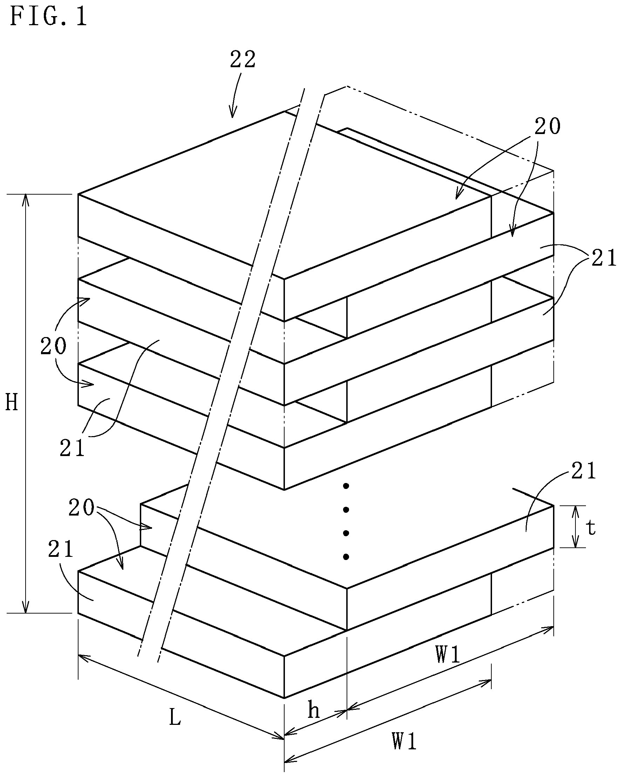

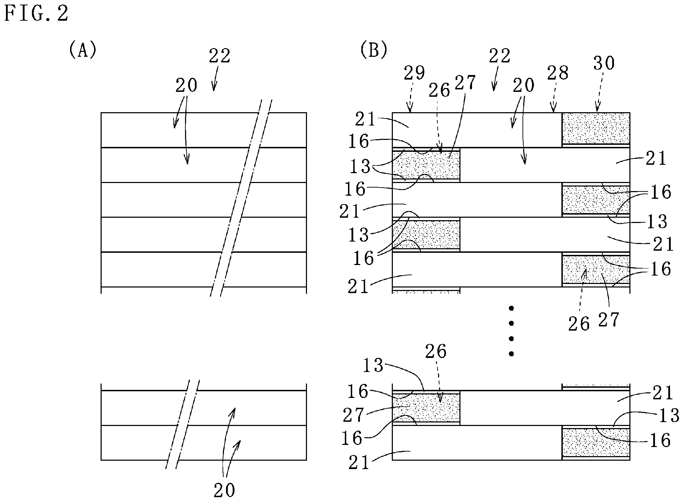

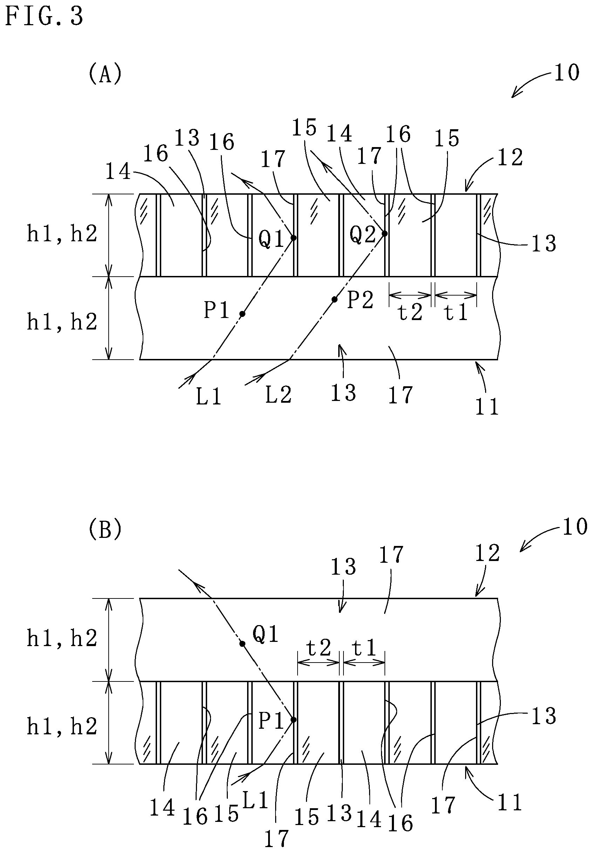

First, an optical image forming device 10 manufactured by a method for manufacturing an optical image forming device according to an embodiment of the present invention shown in Figs. 1, 2(A), and 2(B) will be described with reference to Figs. 3(A) and 3(B).

The optical image forming device 10 includes a pair of first and second light control panels (also referred to as parallel light reflecting panels) 11 and 12 each having a square shape (which may be a rectangular shape) in planar view. Since the first and second light control panels 11 and 12 have the same basic shape, the same reference signs are provided to the same constituent elements. Note that, referring to Figs. 3 (A) and 3(B), the first and second light control panels 11 and 12 are respectively placed on the lower side (light input side) and the upper side (light output side).

As shown in Figs. 3(A) and 3(B), a plurality of strip-shaped light reflecting portions (vertical light reflecting portions or mirrors) 13 are arranged parallel at intervals on the first light control panel 11 (similar to the second light control panel 12) so as to be orthogonal to both surfaces (the obverse and reverse surfaces) of the panel.

Specifically, the first and second light control panels 11 and 12 each are formed by alternately stacking glass plate members 14 and transparent resin plate members 15 each having a rectangular cross-section and the same dimensions and forming the light reflecting portions 13 between the glass plate members 14 and the resin plate members 15. More specifically, the light reflecting portions 13 are respectively formed on opposing surfaces (thickness-direction both surfaces) 16 of the adj acent glass plate members 14, and the glass plate members 14 located adj acent across each resin plate member 15 are joined to each other through the light reflecting portion 13 by only the resin of the resin plate member 15.

The first and second light control panels 11 and 12 are stacked and joined to be integrated into the optical image forming device 10, with the light reflecting portions 13 of the first light control panel 11 and the light reflecting portions 13 of the second light control panel 12 being arranged to be orthogonal to each other in planar view (for example, arranged to intersect within the range of 85° to 95°, preferably 88° to 92°). The first and second light control panels 11 and 12 each are, for example, a large panel with the length of one side being about 500 mm to 2000 mm (preferably, the lower limit is 750 mm, more preferably 1000 mm, and the upper limit is 1800 mm). However, each panel is not limited to this.

A transparent adhesive agent (for example, a UV curing resin, two-component curing resin, thermoset resin, or room-temperature curing resin) (not shown) is placed between the first light control panel 11 and the second light control panel 12 stacked on each other. Although Figs. 3(A) and 3(B) show a state in which the upper surface of the first light control panel 11 is in contact with the lower surface of the second light control panel 12 (with no gap: 0 mm), the panels may be arranged near each other with a gap (for example, about more than 0 to 5 mm or less). In this case, this gap is also filled with an adhesive agent (the gap is equal to the thickness of the adhesive agent).

The synthetic resin forming the resin plate member 15 or the adhesive agent described above preferably has the same or approximately the same refractive index of the glass plate member 14 (a transparent plate member 20 (to be described later)). Specifically, it is possible to use a synthetic resin having a refractive index η2 equal to or almost equal to a refractive index η1 of the glass plate member 14 (for example, in the range of (0.9 to 1.1) × η1, preferably the range of (0.95 to 1.05) × η1, more preferably the range of (0.98 to 1.02) × η1).

In this case, as a method for making the refractive index η2 of a synthetic resin match the refractive index η1 of each glass plate member 14 forming the first and second light control panels 11 and 12, for example, there is available a method for adjusting a refractive index by mixing two or more different types of resins. In this case, it is preferable to match the refractive indices of the glass plate member and the synthetic resin in numerical value up to the upper three digits (up to two decimal places).

Note that the above synthetic resin is preferably one of the following types: an ultraviolet curing type (for example, (meta)acrylate such as urethane (meta)acrylate, (meta) acrylate having a polyisoprene skeleton, (meta) acrylate having a polybutadiene skeleton, or (meta)acrylate monomer), thermoset type, two-component curing type, and room-temperature curing type. Alternatively, it is possible to also use, for example, a thermoplastic resin such as polymethylmethacrylate (PMMA: acrylic resin), amorphous fluorine resin, cycloolefin polymer (COP), optical polycarbonate, fluorene polyester, or polyether sulfone.

The light reflecting portions 13 are metal films (metal coats) formed on the opposing surfaces 16 of each glass plate member 14 by a mirror surface process. The obverse and reverse surfaces of each metal film (light reflecting portion 13) serve as light reflecting surfaces 17.

The light reflecting portions 13 of the first and second light control panels 11 and 12 are formed on the opposing surfaces 16 of each glass plate member 14. Accordingly, assuming that h1 is the height of the glass plate member 14 and the resin plate member 15 and h2 is the height of the light reflecting portion 13, the height h1 is equal to the height h2 (hereinafter simply referred to as h) . In this case, for example, the height h within the range of 0.2 mm to 10 mm (preferably the lower limit is 0.5 mm, more preferably 1 mm, and preferably the upper limit is 5 mm, more preferably 3 mm, more preferably 2.5 mm) is practical. However, the present invention is not limited to these numerical values.

A thickness t1 of the glass plate member 14 and a thickness t2 of the resin plate member 15 (the thickness of the light reflecting portion 13 is, for example, 60 nm or more, preferably 80 nm or more (for example, about 100 nm: the upper limit is about 150 nm)) are made almost equal by the method for manufacturing the optical image forming device 10 (to be described later). For example, these thicknesses fall within the range of 0.1 mm to 2 mm (preferably the lower limit is 0.3 mm and the upper limit is 1.5 mm), and the length of the glass plate member 14 in the longitudinal direction within the range of 500 mm to 2000 mm (preferably the lower limit is 750 mm, more preferably 1000 nm, and the upper limit is 1800 mm) is practical. However, the present invention is not limited to these numerical values.

For the sake of descriptive convenience, the light reflecting portion 13 is shown and emphasized in terms of thickness.

In this case, the aspect ratio (h/p) that is the ratio of a height h (corresponding to the height h1 of the glass plate member 14 and the resin plate member 15 or the height h2 of the light reflecting portion 13) to a pitch p (almost equal to the thickness t1 of the glass plate member 14 or the thickness t2 of the resin plate member 15) of the light reflecting portion 13 (the light reflecting surface 17) preferably falls within the range of 0.8 to 5 (preferably the lower limit is 1.5, more preferably 2, and the upper limit is 4, more preferably 3.5) . This makes it possible to obtain the light reflecting portion 13 having a higher height.

In this case, the light reflecting portions 13 are formed on the opposing surfaces 16 on both sides of the glass plate member 14 in the thickness direction. However, the light reflecting portion 13 (the light reflecting surface 17) may be formed on only one of the opposing surfaces 16 of the glass plate member 14 which is located on one side in the thickness direction when, for example, the thickness of the glass plate member 14 is thin or in accordance with the required product quality.

Referring to Figs. 3 (A) and 3 (B), light L1 and light L2 from an object which obliquely enter from the lower left side of the optical image forming device 10 are reflected at P1 and P2 on the light reflecting surfaces 17 of the first light control panel 11 on the lower side and are further reflected at Q1 and Q2 on the light reflecting surfaces 17 of the second light control panel 12 on the upper side, thereby forming a stereoscopic image on the upper side of the optical image forming device 10.

As described above, since the upper surface and the lower surface of the first and second light control panels 11 and 12 are arranged in contact with each other (or near each other), the optical image forming device 10 can improve the degree of collection of light from an object and obtain a clearer image.

Note that the light input sides of the light reflecting portions 13 formed on the opposing surfaces 16 of the glass plate members 14 are used as the light reflecting surfaces 17 of the first and second light control panels 11 and 12. Referring to Figs. 3(A) and 3(B), since light enters the device from the left side, the left side of the light reflecting portion 13 is used as the light reflecting surface 17. However, when light enters the device from the right side, the right side of the light reflecting portion 13 is used as the light reflecting surface 17.

In the operation of the optical image forming device 10, when light is input to the glass plate member 14 and the resin plate member 15 from the air and when light outputs from the glass plate member 14 and the resin plate member 15 into the air, a light refraction phenomenon, or a total reflection phenomenon in some cases, occurs. Accordingly, the optical image forming device 10 needs to be used in consideration of these circumstances. Note that portions other than the light reflecting surfaces 17 serve as light-transmitting surfaces.

A method for manufacturing an optical image forming device according to an embodiment of the present invention will be described next with reference to Figs. 1, 2(A), and 2(B).

The method for manufacturing an optical image forming device according to this embodiment shown in Figs. 1, 2(A), and 2(B) includes a laminated body forming process, a light reflecting portion forming process, a resin filling process, a cutting process, a planarization process, and an assembly process. This method can manufacture an optical image forming device at a relatively low cost and reduce the distortion of a formed image. The method will be described in detail below.

### (Laminated Body Forming Process)

As shown in Fig. 1, the plurality of transparent plate members 20, each made of a glass member having a rectangular shape with a small width and a large length in planar view, are stacked on each other while being alternately shifted by a predetermined length in the widthwise direction to form protruding portions 21, thereby forming a laminated body 22.

The number of the transparent plate members 20 to be stacked to form the laminated body 22 is, for example, set to make the height H of the laminated body 22 in the stacking direction be about 500 mm to 2000 mm (preferably the lower limit is 750 mm, more preferably 1000 mm, and the upper limit is 1800 mm). However, this value is not specifically limited.

For example, the following dimensions of the transparent plate member 20 are practical: a width W1 in the range of 8 mm to 40 mm (preferably the lower limit is 20 mm), a longitudinal length L in the range of 500 mm to 2000 mm (preferably the lower limit is 750 mm, more preferably 1000 mm, and the upper limit is 1800 mm), a thickness t (corresponding to the thickness t1 of the glass plate member 14) in the range of 0.1 mm to 2 mm (preferably the lower limit is 0.3 mm, and the upper limit is 1.5 mm), and a protrusion length h (corresponding to the height h1 of the glass plate member 14) of the protruding portion 21, for example, in the range of 0.2 mm to 10 mm (preferably the lower limit is 0.5 mm, and the upper limit is 5 mm, more preferably 3 mm) . However, the present invention is not limited to these numerical values.

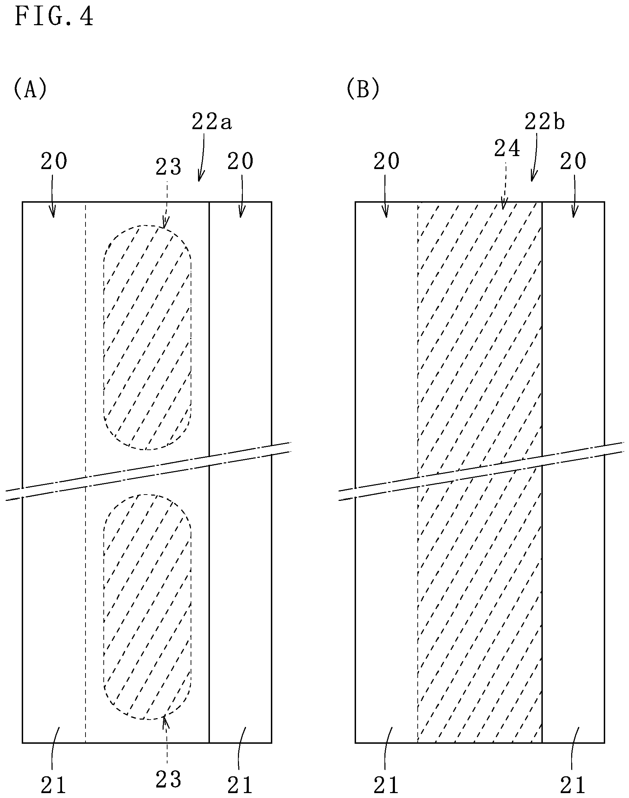

A physical pressing force is applied to the laminated body 22 (for example, pressing with a pressing means) in the stacking direction (the thickness direction of the transparent plate member 20) so as to maintain the above stacked state. However, the plurality of transparent plate members 20 may be joined to each other by a synthetic resin (an example of an adhesive agent) 23 (the same resin as the above synthetic resin) as in the case of, for example, a laminated body 22a shown in Fig. 4 (A). Alternatively, as in the case of a laminated body 22b shown in Fig. 4(B), the transparent plate members 20 may be joined to each other by an OCA tape (an example of an adhesive agent) 24. Note that although the synthetic resin 23 and the OCA (optical clear adhesive) tape 24 each may be placed on only the upper or lower one of the opposing surfaces (only one surface) of the transparent plate member 20, the synthetic resin 23 and the OCA tape 24 each may be placed on both surfaces of the transparent plate member 20.

Both the synthetic resin 23 and the OCA tape 24 are placed on the stacking regions of the transparent plate members 20 of the laminated bodies 22a and 22b except for the both end portions in the widthwise direction (that is, the protruding portions 21). In this case, since the synthetic resin 23 is in a liquid form, the resin cannot be placed on the entire region described above as shown in Fig. 4(A). In contrast to this, since the OCA tape is an optical adhesive tape in a film form, the tape can be placed on the entire region described above as shown in Fig. 4 (B). Note that the OCA tape has a thickness of, for example, about 10 µm to 300 µm (more specifically, the lower limit is 50 µm and the upper limit is 150 µm: about 100 µm in this case) and is made of a transparent resin such as silicone resin, acrylic resin, or polyurethane-based resin.

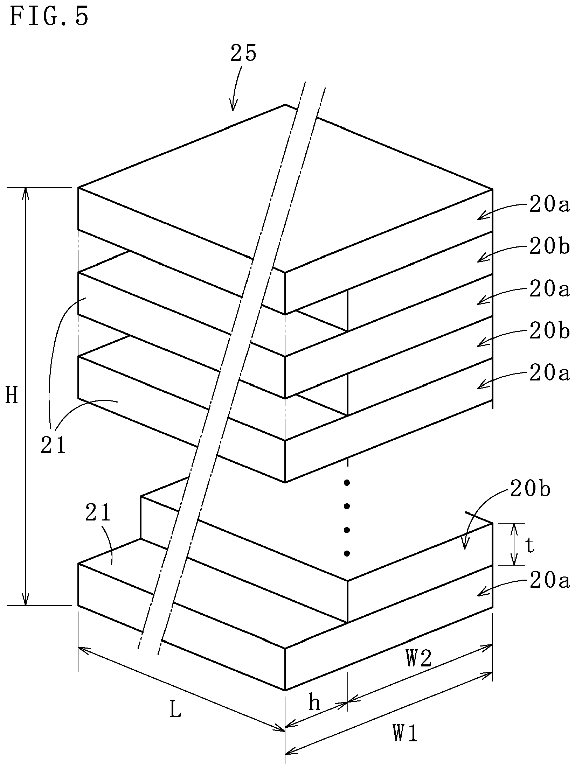

The above method can form the plurality of protruding portions 21 having the same protrusion length h on both sides of the laminated body 22 in the widthwise direction. However, a laminated body 25 can also be manufactured by a method for manufacturing an optical image forming device according to another embodiment of the present invention shown in Fig. 5.

As shown in Fig. 5, a plurality of first and second transparent plate members 20a and 20b of two types with different widths, each made of a glass member having a rectangular shape with a small width and a large length in planar view, are prepared. The first and second transparent plate members 20a and 20b are alternately stacked on each other while being aligned on one side in the widthwise direction, with the protruding portions 21 being formed on the other side in the widthwise direction, thereby forming the laminated body 25.

The dimensions of the first transparent plate member 20a are the same as those of the transparent plate member 20 described above, and the dimensions of the second transparent plate member 20b are the same as those of the first transparent plate member 20a except for the width. A width W2 of the second transparent plate member 20b is made smaller than, for example, the width W1 of the first transparent plate member 20a within the range of 0.2 mm to 10 mm in accordance with the protrusion length of the protruding portion 21 to be formed.

Similar to the laminated body 22 described above, a physical pressing force is applied from the stacking direction to the laminated body 25. However, the first and second transparent plate members 20a and 20b, which are alternately arranged, can be joined to each other by the synthetic resin 23 or the OCA tape 24 described above.

### (Light Reflecting Portion Forming Process)

As shown in Fig. 2(B), the light reflecting portions 13 are formed on at least the opposing surfaces 16 (corresponding to the opposing surfaces 16 of the glass plate member 14) of the adjacent protruding portions 21.

The light reflecting portion 13 is formed from a metal film. This metal film is formed by using a metal having high reflectance (for example, Al (aluminum), Ag (silver), Ni (nickel), Ti (titanium), or Cr (chromium)). The surface of this metal film serves as the light reflecting surface (metal reflecting surface) 17.

Note that the thickness of the light reflecting portion 13 (metal film) is, for example, 60 nm or more, preferably 80 nm or more (for example, about 100 nm: the upper limit is about 150 nm). However, the thickness is not limited to this.

Irradiation can be used to form the light reflecting portion 13.

Irradiation can be performed by obliquely spraying a metal (irradiating with metal) on the opposing surfaces 16. This metal spraying includes sputtering, metal deposition, and blowing of fine metal particles, or irradiation with ion beams, etc. Note that since irradiation is performed by obliquely (from a specific direction) spraying a metal (irradiating with a metal) on the opposing surfaces 16, one surface side and top surface of each transparent plate member 20 (each protruding portion 21) are coated with the metal.

Accordingly, irradiation is performed for the laminated body 22 about four times. This process is more economical than when metal films are entirely formed on both surfaces of the transparent plate member 20 in advance.

### (Resin Filling Process)

As shown in Fig. 2 (B), a gap region 26 between the adjacent protruding portions 21 on which the light reflecting portions 13 are formed is filled with a transparent resin 27, which is then cured (the transparent resin 27 serves as the transparent resin plate member 15 described above).

The refractive index η2 of the transparent resin 27 is equal to or almost equal to the refractive index η1 of the transparent plate member 20 (for example, the ratio between the refractive index η1 and η2 of the transparent plate member 20 and the transparent resin 27 is 0.9 to 1.1).

Note that the gap region 26 is preferably filled with the transparent resin 27 in a deaerated state with, for example, transparent glass or resin thin plates being placed on both side surfaces of the transparent plate member 20 (both end faces in the longitudinal direction). These thin plates can be removed after the transparent resin 27 is cured.

Since the laminated body 22 has the plurality of protruding portions 21 formed on both sides in the widthwise direction, the light reflecting portion forming process and the resin filling process described above are performed for the protruding portions 21 on both sides. For example, after the light reflecting portions 13 are formed on both sides of the laminated body 22 (the light reflecting portion forming process), filling and curing of the transparent resin 27 (the resin filling process) are performed for each side of the laminated body 22. Alternatively, it is possible to sequentially perform the formation of the light reflecting portion 13 (the light reflecting portion forming process) and filling and curing of the transparent resin 27 (the resin filling process) for each side of the laminated body 22. This makes it possible to manufacture the pair of the first and second light control panels 11 and 12 at one time from the one laminated body 22.

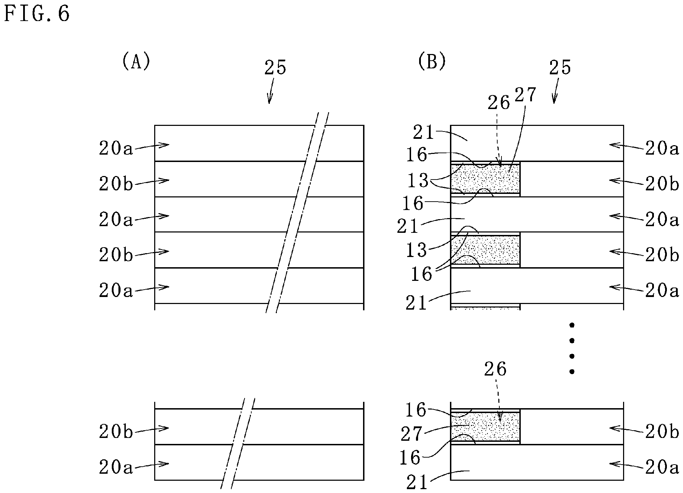

In contrast, as shown in Figs. 6(A) and 6(B), since the laminated body 25 has the plurality of protruding portions 21 formed only one side in the widthwise direction, the light reflecting portion forming process and the resin filling process described above are sequentially performed for the protruding portions 21. Accordingly, the first and second light control panels 11 and 12 can be simultaneously manufactured from the two laminated bodies 25, and hence the manufacturing time can be shortened.

### (Cutting Process)

The protruding portions 21 integrated by filling the gap regions 26 with the transparent resins 27 on both sides of the laminated body 22 are cut and separated from a laminated main body 28 (the portion obtained by removing the protruding portions 21 from the laminated body 22) shown in Fig. 2(B), thereby manufacturing material members 29 and 30 of the pair of the first and second light control panels 11 and 12. Note that only one side of the laminated body 25 in the widthwise direction, on which the protruding portions 21 are integrally formed by filling the transparent resin 27, is cut.

The cutting of the protruding portions 21 may be performed with respect to the portions where the protruding portions 21 and the transparent resins 27 are alternately placed (that is, the positions where the transparent plate members 20 located between the adjacent transparent plate members 20 forming the protruding portions 21 (the proximal end positions of the protruding portions 21) are not cut).

However, in the light reflecting portion forming process described above, since the thickness of each formed metal film tends to decrease toward the proximal end of the protruding portion (gradation tends to occur), cutting is preferably performed at a position avoiding a thin portion of the metal film (a position located on the proximal end side of the protruding portion relative to the distal end side). In this case, the protrusion length of each protruding portion in the laminated body forming process is preferably increased in consideration of the thin portion.

In addition, further increasing the protrusion length of each protruding portion in the laminated body forming process can manufacture a plurality of (for example, two or three) material members of light control panels from one side of the laminated body in the widthwise direction.

### (Planarization Process)

The cut end faces of the material members 29 and 30 and the exposed end faces (both end faces in the widthwise direction) on the opposite side are planarized to manufacture the first and second light control panels 11 and 12. Note that the planarization process is performed so as to make both the cut end faces and the exposed end faces transparent and horizontal.

This planarization process can use a polishing process using, for example, a polishing agent, etc., in a paste form or a polishing agent that dissolves in response to a chemical. However, the polishing agent to be used is not specifically limited as long as the both end faces of the material members 29 and 30 in the widthwise direction can be planarized.

When the above polishing process is performed, the surfaces of the first and second light control panels 11 and 12 become white, which may adversely affect the product quality. In this case, transparent cover thin plate members made of a glass or resin material are bonded to the polished surfaces of the first and second light control panels 11 and 12 having undergone the polishing process by using a transparent adhesive agent (the same adhesive agent as that used above to bond the first light control panel 11 to the second light control panel 12). This makes it possible to prevent adverse effects and protect the first and second light control panels 11 and 12. Note that the transparent cover thin plates can also be bonded after the assembly process described later.

### (Assembly Process)

The first light control panel 11 is placed on, for example, a support base, and the above adhesive agent (in liquid (or jelly) form) is placed on the first light control panel 11. The second light control panel 12 is then overlaid on the first light control panel 11 while the respective light reflecting portions 13 are arranged orthogonal to each other in planar view.

In a deaerated state (a reduced pressure state or a vacuum state), the second light control panel 12 is pressed against the first light control panel 11 by pressing to join the first and second light control panels 11 and 12 to each other. Joining the first and second light control panels 11 and 12 in the deaerated state in this manner can prevent the generation of air bubbles inside. Note that it is also possible to remove air bubbles generated inside by applying vibration such as ultrasonic vibration (vibrating) while joining the first and second light control panels 11 and 12.

As this adhesive agent, a thermoplastic resin in a plate form (sheet form) can be used.

In this case, first, a plate-like adhesive agent is placed on the first light control panel 11, and the second light control panel 12 is further placed on the adhesive agent. Next, in a deaerated state, while the second light control panel 12 is pressed against the first light control panel 11 by pressing, at least the adhesive agent is heated, softened (moreover, melted), and cooled.

In addition, in a deaerated state, an adhesive agent can also be injected between the first light control panel 11 and the second light control panel 12 overlaid and placed to oppose each other. In this case, portions other than the portion in which the adhesive agent is injected are sealed.

With the above methods, the optical image forming device 10 shown in Figs. 3(A) and 3(B) is completed.

Note that when the laminated body 25 is used, a pair of light control panels each are manufactured by a laminated body forming process to a planarization process in this sequence.

The optical image forming device 10 can be manufactured by using, instead of the transparent plate members 20 described above, transparent plate members to which light reflecting portions are formed on one surface or both surfaces of the members (at least regions serving as the opposing surfaces of the adjacent protruding portions; the same hereinafter) (first and second transparent plate members of two types with different widths, to which light reflecting portions are formed on one surface or both surfaces of the members, can be used instead of the first and second transparent plate members 20a and 20b).

No light reflecting portion is formed on the circumference (the surface except for both surfaces) of this transparent plate member (transparent state).

An optical image forming device can be manufactured by sequentially performing the laminated body forming process, the resin filling process, the cutting process, the planarization process, and the assembly process, each of which has been described above, using a plurality of such transparent plate members.

Although the present invention has been described with reference to the embodiments, the present invention is not limited to the configurations of the embodiments described above. The present invention includes other embodiments and modifications conceivable within the range of particulars described in the scope of claims. For example, the scope of rights of the present invention includes a case in which the optical image forming device and the method for manufacturing the device according to the present invention are configured by combining parts or all of the respective embodiments and modifications described above.

The above embodiments each have exemplified the case in which the transparent plate members constituting the first and second light control panels are made of glass. However, each transparent plate member can be formed from a resin having high transparency, high hardness, and high melting point.

### Industrial Applicability

The optical image forming device and the method for manufacturing the device according to the present invention allow for manufacturing an optical image forming device at a relatively low cost with little distortion in formed images. This makes it possible to effectively use the optical image forming device for devices requiring images (for example, medical equipment, home electric appliances, vehicles, aircraft, ships and others).

### Reference Signs List

10: optical image forming device, 11: first light control panel, 12: second light control panel, 13: light reflecting portion, 14: glass plate member, 15: resin plate member, 16: opposing surface, 17: light reflecting surface, 20, 20a, 20b: transparent plate member, 21: protruding portion, 22, 22a, 22b: laminated body, 23: synthetic resin (adhesive agent), 24: OCA tape (adhesive agent), 25: laminated body, 26: gap region, 27: transparent resin, 28: laminated main body, 29, 30: material member

## Claims

1. An optical image forming device including two light control panels (11,12) each having a plurality of strip-shaped light reflecting portions (13) arranged in parallel, the light control panels (11,12) being stacked on each other so as to make the light reflecting portions (13) of the respective light control panels orthogonal to each other in planar view, the optical image forming device **characterized in that** each of the light control panels (11,12) has glass plate members (14) and transparent resin plate members (15) alternately stacked on each other, the glass plate member (14) and the transparent resin plate member (15) each have a rectangular cross-section and the same dimensions, the light reflecting portion (13) is formed between the glass plate member (14) and the resin plate member (15), a refractive index of the resin plate member falls within a range of 0.9 to 1.1 times a refractive index of the glass plate member, and the glass plate members (14) on which the light reflecting portions (13) are formed and which are adjacent across the resin plate member (15) are joined to each other by only a resin of the resin plate member (15).

2. A method for manufacturing an optical image forming device including two light control panels (11,12) each having a plurality of strip-shaped light reflecting portions (13) arranged in parallel, the light control panels (11,12) being stacked on each other so as to make the light reflecting portions of the respective light control panels orthogonal to each other in planar view, the method **characterized by** comprising:
a laminated body forming process of forming a laminated body by stacking a plurality of transparent plate members, each formed from a glass or hard high-melting resin member having a rectangular shape with a small width and a large length in planar view, while alternately shifting the transparent plate members by a predetermined length in a widthwise direction so as to form protruding portions;
a light reflecting portion forming process of forming the light reflecting portions (13) on at least opposing surfaces of the adjacent protruding portions;
a resin filling process of filling a gap region between the adjacent protruding portion with a transparent resin;
a cutting process of cutting the protruding portions integrated by filling the transparent resin on each of both sides of the laminated body to manufacture two material members for a pair of the light control panels separated from a laminated main body;
a planarization process of planarizing both end faces of each of the material members in the widthwise direction to manufacture the two light control panels; and
an assembly process of stacking and joining the two light control panels (11,12) so as to make the light reflecting portions (13) of the respective light control panels orthogonal to each other in planar view,
wherein the transparent plate member and the transparent resin have refractive indices whose ratio is set to 0.9 to 1.1.

3. A method for manufacturing an optical image forming device including two light control panels (11,12) each having a plurality of strip-shaped light reflecting portions (13) arranged in parallel, the light control panels (11,12) being stacked on each other so as to make the light reflecting portions (13) of the respective light control panels orthogonal to each other in planar view, the method **characterized by** comprising:
a laminated body forming process of forming a laminated body by preparing a plurality of transparent plate members of two types having different widths, each formed from a glass or hard high-melting resin member having a rectangular shape with a small width and a large length in planar view, and alternately stacking the transparent plate members of the two types while the transparent plate members are aligned on one side in a widthwise direction, with protruding portions being formed on the other side in the widthwise direction;
a light reflecting portion forming process of forming the light reflecting portions (13) on at least opposing surfaces of the adjacent protruding portions;
a resin filling process of filling a gap region between the adjacent protruding portion with a transparent resin;
a cutting process of cutting the protruding portions integrated by filling the transparent resin and separating from a laminated main body to manufacture at least one material member for the light control panel;
a planarization process of manufacturing the light control panel by planarizing both end faces of the material member in the widthwise direction; and
an assembly process of stacking and joining the two light control panels (11,12) manufactured by sequential execution of the laminated body forming process to the planarization process so as to make the light reflecting portions of the respective light control panels orthogonal to each other in planar view,
wherein the transparent plate member and the transparent resin have refractive indices whose ratio is set to 0.9 to 1.1.

4. A method for manufacturing an optical image forming device including two light control panels (11,12) each having a plurality of strip-shaped light reflecting portions (13) arranged in parallel, the light control panels (11, 12) being stacked on each other so as to make the light reflecting portions (13) of the respective light control panels orthogonal to each other in planar view, the method **characterized by** comprising:
a laminated body forming process of forming a laminated body by stacking a plurality of transparent plate members, each formed from a glass or hard high-melting resin member having a rectangular shape with a small width and a large length, with the light reflecting portion being formed in advance on all or part of a region, while alternately shifting the transparent plate members by a predetermined length in a widthwise direction so as to form protruding portions;
a resin filling process of filling a gap region between the adjacent protruding portion with a transparent resin;
a cutting process of cutting the protruding portions integrated by filling the transparent resin on each of both sides of the laminated body to manufacture two material members for a pair of the light control panels separated from a laminated main body;
a planarization process of planarizing both end faces of each of the material members in the widthwise direction to manufacture the two light control panels (11,12); ol and
an assembly process of stacking and joining the two light control panels (11,12) so as to make the light reflecting portions (13) of the respective light control panels orthogonal to each other in planar view,
wherein part of the region on which the light reflecting portion is formed includes a region serving as an opposing surface of the protruding portion and the transparent plate member and the transparent resin have refractive indices whose ratio is set to 0.9 to 1.1.

5. A method for manufacturing an optical image forming device including two light control panels (11,12) each having a plurality of strip-shaped light reflecting portions (13) arranged in parallel, the light control panels (11,12) being stacked on each other so as to make the light reflecting portions (13) of the respective light control panels orthogonal to each other in planar view, the method **characterized by** comprising:
a laminated body forming process of forming a laminated body by preparing a plurality of transparent plate members of two types having different widths, each formed from a glass or hard high-melting resin member having a rectangular shape with a small width and a large length in planar view, with the light reflecting portion being formed in advance on all or part of a region, and alternately stacking the transparent plate members of the two types while the transparent plate members are aligned on one side in a widthwise direction, with protruding portions being formed on the other side in the widthwise direction;
a resin filling process of filling a gap region between the adjacent protruding portion with a transparent resin;
a cutting process of cutting the protruding portions integrated by filling the transparent resin and separating from a laminated main body to manufacture at least one material member for the light control panel;
a planarization process of manufacturing the light control panel by planarizing both end faces of the material member in the widthwise direction; and
an assembly process of stacking and joining the two light control panels (11,12) manufactured by sequential execution of the laminated body forming process to the planarization process so as to make the light reflecting portions (13) of the respective light control panels orthogonal to each other in planar view,
wherein part of the region on which the light reflecting portion is formed includes a region serving as an opposing surface of the protruding portion and the transparent plate member and the transparent resin have refractive indices whose ratio is set to 0.9 to 1.1.

6. The method for manufacturing the optical image forming device according to any one of claims 2 to 5, **characterized in that** in the laminated body forming process, the plurality of transparent plate members are joined to each other by an adhesive agent.

7. The method for manufacturing the optical image forming device according to claim 6, **characterized in that** the adhesive agent is placed on a stacking region of each of the transparent plate members of the laminated body except for the both end portions in the widthwise direction.

8. The method for manufacturing the optical image forming device according to claim 6 or 7, **characterized in that** the adhesive agent is an OCA tape.

## Patentansprüche

1. Optische Bilderzeugungsvorrichtung mit zwei Lichtsteuerplatten (11, 12), die jeweils eine Vielzahl von parallel angeordneten streifenförmigen lichtreflektierenden Abschnitten (13) aufweisen, wobei die Lichtsteuerplatten (11, 12) derart aufeinander gestapelt sind, dass die lichtreflektierenden Abschnitte (13) der jeweiligen Lichtsteuerplatten in Draufsicht betrachtet orthogonal zueinander angeordnet sind,
wobei die optische Bilderzeugungsvorrichtung **dadurch gekennzeichnet ist, dass**
jede der Lichtsteuerplatten (11, 12) Glasplattenelemente (14) und transparente Harzplattenelemente (15) aufweist, die abwechselnd aufeinander gestapelt sind, wobei das Glasplattenelement (14) und das transparente Harzplattenelement (15) jeweils einen rechteckigen Querschnitt und die gleichen Abmessungen haben, der lichtreflektierende Abschnitt (13) zwischen dem Glasplattenelement (14) und dem Harzplattenelement (15) ausgebildet ist, ein Brechungsindex des Harzplattenelements in einen Bereich des 0,9- bis 1,1-fachen eines Brechungsindex des Glasplattenelements fällt, und die Glasplattenelemente (14), auf denen die lichtreflektierenden Abschnitte (13) ausgebildet sind und die über das Harzplattenelement (15) hinweg benachbart zueinander angeordnet sind, nur durch ein Harz des Harzplattenelements (15) miteinander verbunden sind.

2. Verfahren zum Herstellen einer optischen Bilderzeugungsvorrichtung mit zwei Lichtsteuerplatten (11, 12), die jeweils eine Vielzahl von parallel angeordneten streifenförmigen lichtreflektierenden Abschnitten (13) aufweisen, wobei die Lichtsteuerplatten (11, 12) derart übereinander gestapelt sind, dass die lichtreflektierenden Abschnitte der jeweiligen Lichtsteuerplatten in Draufsicht betrachtet orthogonal zueinander angeordnet sind, wobei das Verfahren **dadurch gekennzeichnet ist, dass** es aufweist:
einen Prozess zum Ausbilden eines laminierten Körpers durch Stapeln einer Vielzahl von transparenten Plattenelementen, von denen jedes aus einem Glas- oder einem harten, hochschmelzenden Harzelement gebildet ist, das in Draufsicht betrachtet eine rechteckige Form mit einer kleinen Breite und einer großen Länge aufweist, während die transparenten Plattenelemente abwechselnd um ein vorgegebenes Maß in der Breitenrichtung versetzt werden, um hervorstehende Abschnitte zu bilden;
einen Prozess zum Ausbilden der lichtreflektierenden Abschnitte (13) auf mindestens gegenüberliegenden Oberflächen der benachbarten hervorstehenden Abschnitte;
einen Harzfüllprozess zum Füllen eines Lückenbereichs zwischen den benachbarten hervorstehenden Abschnitten mit einem transparenten Harz;
einen Schneidprozess zum Schneiden der hervorstehenden Abschnitte, die durch das Füllen des transparenten Harzes integriert sind, auf jeder der beiden Seiten des laminierten Körpers, um zwei Materialelemente für ein Paar der Lichtsteuerplatten herzustellen, die von einem laminierten Hauptkörper getrennt sind;
einen Planarisierungsprozess zum Planarisieren beider Endflächen jedes der Materialelemente in der Breitenrichtung, um die zwei Lichtsteuerplatten herzustellen; und
einen Montageprozess zum Stapeln und Verbinden der zwei Lichtsteuerplatten (11, 12), um die lichtreflektierenden Abschnitte (13) der jeweiligen Lichtsteuerplatten in Draufsicht betrachtet orthogonal zueinander zu machen,
wobei das transparente Plattenelement und das transparente Harz Brechungsindizes haben, deren Verhältnis auf 0,9 bis 1,1 eingestellt ist.

3. Verfahren zum Herstellen einer optischen Bilderzeugungsvorrichtung mit zwei Lichtsteuerplatten (11, 12), die jeweils eine Vielzahl von parallel angeordneten streifenförmigen lichtreflektierenden Abschnitten (13) aufweisen, wobei die Lichtsteuerplatten (11, 12) derart übereinander gestapelt sind, dass die lichtreflektierenden Abschnitte der jeweiligen Lichtsteuerplatten in Draufsicht betrachtet orthogonal zueinander sind, wobei das Verfahren **gekennzeichnet ist durch**:
einen Prozess zum Ausbilden eines laminierten Körpers **durch** Herstellen einer Vielzahl von transparenten Plattenelementen zweier Typen mit unterschiedlichen Breiten, die jeweils aus einem Glas- oder einem harten, hochschmelzenden Harzelement mit einer rechteckigen Form mit einer kleinen Breite und einer großen Länge in der Draufsicht ausgebildet sind, und abwechselndes Stapeln der transparenten Plattenelemente der beiden Typen, während die transparenten Plattenelemente auf einer Seite in einer Breitenrichtung ausgerichtet sind, wobei hervorstehende Abschnitte auf der anderen Seite in der Breitenrichtung ausgebildet werden;
einen Prozess zum Ausbilden der lichtreflektierenden Abschnitte (13) auf mindestens gegenüberliegenden Oberflächen der benachbarten hervorstehenden Abschnitte;
einen Harzfüllprozess zum Füllen eines Lückenbereichs zwischen den benachbarten hervorstehenden Abschnitten mit einem transparenten Harz;
einen Schneidprozess zum Schneiden der hervorstehenden Abschnitte, die durch Füllen des transparenten Harzes integriert sind, und zum Trennen von einem laminierten Hauptkörper, um mindestens ein Materialelement für die Lichtsteuerplatte herzustellen,
einen Planarisierungsprozess zum Herstellen der Lichtsteuerplatte **durch** Planarisieren beider Endflächen des Materialelements in der Breitenrichtung; und
einen Montageprozess zum Stapeln und Verbinden der beiden Lichtsteuerplatten (11, 12), die **durch** aufeinanderfolgendes Ausführen des Prozesses zum Herstellen eines laminierten Körpers bis zum Planarisierungsprozess hergestellt wurden, um die lichtreflektierenden Abschnitte der jeweiligen Lichtsteuerplatten in Draufsicht betrachtet orthogonal zueinander zu machen,
wobei das transparente Plattenelement und das transparente Harz Brechungsindizes aufweisen, deren Verhältnis auf 0,9 bis 1,1 eingestellt ist.

4. Verfahren zum Herstellen einer optischen Bilderzeugungsvorrichtung mit zwei Lichtsteuerplatten (11, 12), die jeweils eine Vielzahl von parallel angeordneten, streifenförmigen lichtreflektierenden Abschnitten (13) aufweisen, wobei die Lichtsteuerplatten (11, 12) derart aufeinander gestapelt sind, dass die lichtreflektierenden Abschnitte (13) der jeweiligen Lichtsteuerplatten in Draufsicht betrachtet orthogonal zueinander sind,
wobei das Verfahren **gekennzeichnet ist durch**:
einen Prozess zum Ausbilden eines laminierten Körpers **durch** Stapeln einer Vielzahl von transparenten Plattenelementen, von denen jedes aus einem Glas- oder aus einem harten, hochschmelzenden Harzelement ausgebildet ist, das eine rechteckige Form mit einer kleinen Breite und einer großen Länge aufweist, wobei der lichtreflektierende Abschnitt im Voraus auf dem gesamten oder einem Teil eines Bereichs ausgebildet wird, während die transparenten Plattenelemente abwechselnd um ein vorgegebenes Maß in der Breitenrichtung versetzt werden, um hervorstehende Abschnitte zu bilden;
einen Harzfüllprozess zum Füllen eines Lückenbereichs zwischen den benachbarten hervorstehenden Abschnitten mit einem transparenten Harz;
einen Schneidprozess zum Schneiden der hervorstehenden Abschnitte, die durch Füllen des transparenten Harzes integriert sind, auf jeder der beiden Seiten des laminierten Körpers, um zwei Materialelemente für ein Paar der Lichtsteuerplatten herzustellen, die von einem laminierten Hauptkörper getrennt sind;
einen Planarisierungsprozess zum Planarisieren beider Endflächen jedes der Materialelemente in der Breitenrichtung, um die zwei Lichtsteuerplatten (11, 12) herzustellen; und
einen Montageprozess zum Stapeln und Verbinden der zwei Lichtsteuerplatten (11, 12), um die lichtreflektierenden Abschnitte (13) der jeweiligen Lichtsteuerplatten in Draufsicht betrachtet orthogonal zueinander zu machen,
wobei ein Teil des Bereichs, auf dem der lichtreflektierende Abschnitt ausgebildet ist, einen Bereich aufweist, der als eine gegenüberliegende Oberfläche des hervorstehenden Abschnitts dient, und das transparente Plattenelement und das transparente Harz Brechungsindizes aufweisen, deren Verhältnis auf 0,9 bis 1,1 eingestellt ist.

5. Verfahren zum Herstellen einer optischen Bilderzeugungsvorrichtung mit zwei Lichtsteuerplatten (11, 12), die jeweils eine Vielzahl von parallel angeordneten streifenförmigen lichtreflektierenden Abschnitten (13) aufweisen, wobei die Lichtsteuerplatten (11, 12) derart aufeinander gestapelt sind, dass die lichtreflektierenden Abschnitte (13) der jeweiligen Lichtsteuerplatten in Draufsicht betrachtet orthogonal zueinander sind,
wobei das Verfahren **gekennzeichnet ist durch**:
einen Prozess zum Ausbilden eines laminierten Körpers **durch** Herstellen einer Vielzahl von transparenten Plattenelementen zweier Typen mit unterschiedlichen Breiten, die jeweils aus einem Glas- oder aus einem harten hochschmelzenden Harzelement mit einer rechteckigen Form mit einer kleinen Breite und einer großen Länge in der Draufsicht ausgebildet sind, wobei der lichtreflektierende Abschnitt im Voraus auf dem gesamten oder einem Teil eines Bereichs ausgebildet wird, und abwechselndes Stapeln der transparenten Plattenelemente der beiden Typen, während die transparenten Plattenelemente auf einer Seite in einer Breitenrichtung ausgerichtet sind, wobei hervorstehende Abschnitte auf der anderen Seite in der Breitenrichtung ausgebildet werden,
einen Harzfüllprozess zum Füllen eines Lückenbereichs zwischen benachbarten hervorstehenden Abschnitten mit einem transparenten Harz;
einen Schneidprozess zum Schneiden der hervorstehenden Abschnitte, die durch Füllen des transparenten Harzes integriert sind, und Trennen von einem laminierten Hauptkörper, um mindestens ein Materialelement für die Lichtsteuerplatte herzustellen;
einen Planarisierungsprozess zum Herstellen der Lichtsteuerplatte **durch** Planarisieren beider Endflächen des Materialelements in der Breitenrichtung; und
einen Montageprozess zum Stapeln und Verbinden der beiden Lichtsteuerplatten (11, 12), die **durch** aufeinanderfolgendes Ausführen des Prozesses zum Herstellen eines laminierten Körpers bis zum Planarisierungsprozess hergestellt wurden, um die lichtreflektierenden Abschnitte der jeweiligen Lichtsteuerplatten in Draufsicht betrachtet orthogonal zueinander zu machen,
wobei ein Teil des Bereichs, auf dem der lichtreflektierende Abschnitt ausgebildet ist, einen Bereich aufweist, der als eine gegenüberliegende Oberfläche des hervorstehenden Abschnitts dient, und das transparente Plattenelement und das transparente Harz Brechungsindizes aufweisen, deren Verhältnis auf 0,9 bis 1,1 eingestellt ist.

6. Verfahren zum Herstellen der optischen Bilderzeugungsvorrichtung nach einem der Ansprüche 2 bis 5, **dadurch gekennzeichnet, dass** im Prozess zum Herstellen des laminierten Körpers die Vielzahl von transparenten Plattenelementen durch ein Klebemittel miteinander verbunden werden.

7. Verfahren zum Herstellen der optischen Bilderzeugungsvorrichtung nach Anspruch 6, **dadurch gekennzeichnet, dass** das Klebemittel auf einem Stapelbereich jedes der transparenten Plattenelemente des laminierten Körpers mit Ausnahme der beiden Endabschnitte in der Breitenrichtung angeordnet wird.

8. Verfahren zum Herstellen der optischen Bilderzeugungsvorrichtung nach Anspruch 6 oder 7, **dadurch gekennzeichnet, dass** das Klebemittel ein OCA-Band ist.

## Revendications

1. Dispositif de formation d'images optiques comportant deux panneaux de commande de lumière (11, 12) ayant chacun une pluralité de parties réfléchissant la lumière (13) en forme de bande agencées en parallèle, les panneaux de commande de lumière (11, 12) étant empilés l'un sur l'autre de manière à rendre les parties réfléchissant la lumière (13) des panneaux de commande de lumière respectifs orthogonales l'une par rapport à l'autre en vue plane,
le dispositif de formation d'images optiques étant **caractérisé en ce que** chacun des panneaux de commande de lumière (11, 12) a des éléments de plaque de verre (14) et des éléments de plaque de résine (15) transparents empilés l'un sur l'autre alternativement, chaque élément de plaque de verre (14) et élément de plaque de résine (15) transparent a une section transversale rectangulaire et les mêmes dimensions, la partie réfléchissant la lumière (13) est formée entre l'élément de plaque de verre (14) et l'élément de plaque de résine (15), un indice de réfraction de l'élément de plaque de résine se situe dans une plage allant de 0,9 à 1,1 fois un indice de réfraction de l'élément de plaque de verre, et les éléments de plaque de verre (14) sur lesquels sont formées les parties réfléchissant la lumière (13) et qui sont adjacents à travers l'élément de plaque de résine (15) sont reliés entre eux uniquement par une résine de l'élément de plaque de résine (15).

2. Procédé de fabrication d'un dispositif de formation d'images optiques comportant deux panneaux de commande de lumière (11, 12) ayant chacun une pluralité de parties réfléchissant la lumière (13) en forme de bande agencées en parallèle, les panneaux de commande de lumière (11, 12) étant empilés l'un sur l'autre de manière à rendre les parties réfléchissant la lumière des panneaux de commande de lumière respectifs orthogonales l'une par rapport à l'autre en vue plane, le procédé étant **caractérisé en ce qu'**il comprend :
un processus de formation de corps stratifié pour former un corps stratifié en empilant une pluralité d'éléments de plaque transparents, formés chacun d'un élément en verre ou en résine dure à haut point de fusion ayant une forme rectangulaire avec une petite largeur et une grande longueur en vue plane, tout en décalant alternativement les éléments de plaque transparents d'une longueur prédéterminée dans la direction de la largeur de manière à former des parties saillantes ;
un processus de formation de parties réfléchissant la lumière pour former les parties réfléchissant la lumière (13) sur au moins des surfaces opposées des parties saillantes adjacentes ;
un processus de remplissage de résine pour remplir une région d'espace entre les parties saillantes adjacentes à l'aide d'une résine transparente ;
un processus de coupe pour couper les parties saillantes intégrées en remplissant la résine transparente de chacun des deux côtés du corps stratifié afin de fabriquer deux éléments matériels pour une paire de panneaux de commande de lumière séparés d'un corps principal stratifié ;
un processus d'aplanissement pour aplanir les deux faces d'extrémité de chacun des éléments matériels dans la direction de la largeur afin de fabriquer les deux panneaux de commande de lumière ; et
un processus d'assemblage pour empiler et relier les deux panneaux de commande de lumière (11, 12) de manière à rendre les parties réfléchissant la lumière (13) des panneaux de commande de lumière respectifs orthogonales l'une par rapport à l'autre en vue plane,
dans lequel l'élément de plaque transparent et la résine transparente ont des indices de réfraction dont le rapport est défini de 0,9 à 1,1.

3. Procédé de fabrication d'un dispositif de formation d'images optiques comportant deux panneaux de commande de lumière (11, 12) ayant chacun une pluralité de parties réfléchissant la lumière (13) en forme de bande agencées en parallèle, les panneaux de commande de lumière (11, 12) étant empilés l'un sur l'autre de manière à rendre les parties réfléchissant la lumière (13) des panneaux de commande de lumière respectifs orthogonales l'une par rapport à l'autre en vue plane, le procédé **caractérisé en ce qu'**il comprend :
un processus de formation de corps stratifié pour former un corps stratifié en préparant une pluralité d'éléments de plaque transparents de deux types ayant des largeurs différentes, formés chacun d'un élément en verre ou en résine dure à haut point de fusion ayant une forme rectangulaire avec une petite largeur et une grande longueur en vue plane, et en empilant alternativement les éléments de plaque transparents des deux types tandis que les éléments de plaque transparents sont alignés d'un côté dans la direction de la largeur, les parties saillantes étant formées de l'autre côté dans la direction de la largeur ;
un processus de formation de parties réfléchissant la lumière pour former les parties réfléchissant la lumière (13) sur au moins des surfaces opposées des parties saillantes adjacentes ;
un processus de remplissage de résine pour remplir une région d'espace entre les parties saillantes adjacentes à l'aide d'une résine transparente ;
un processus de coupe pour couper les parties saillantes intégrées en remplissant la résine transparente, et pour séparer un corps principal stratifié afin de fabriquer au moins un élément de matériau pour le panneau de commande de lumière ;
un processus d'aplanissement pour fabriquer le panneau de commande de lumière en aplanissant les deux faces d'extrémité de l'élément de matériau dans la direction de la largeur ; et
un processus d'assemblage pour empiler et relier les deux panneaux de commande de lumière (11, 12) fabriqués en exécutant séquentiellement les processus, du processus de formation de corps stratifié au processus d'aplanissement, de manière à rendre les parties réfléchissant la lumière des panneaux de commande de lumière respectifs orthogonales l'une par rapport à l'autre en vue plane,
dans lequel l'élément de plaque transparent et la résine transparente ont des indices de réfraction dont le rapport est défini de 0,9 à 1,1.

4. Procédé de fabrication d'un dispositif de formation d'images optiques comportant deux panneaux de commande de lumière (11, 12) ayant chacun une pluralité de parties réfléchissant la lumière (13) en forme de bande agencées en parallèle, les panneaux de commande de lumière (11, 12) étant empilés l'un sur l'autre de manière à rendre les parties réfléchissant la lumière (13) des panneaux de commande de lumière respectifs orthogonales l'une par rapport à l'autre en vue plane, le procédé étant **caractérisé en ce qu'**il comprend :
un processus de formation de corps stratifié pour former un corps stratifié en empilant une pluralité d'éléments de plaque transparents, formés chacun d'un élément en verre ou en résine dure à haut point de fusion ayant une forme rectangulaire avec une petite largeur et une grande longueur, la partie réfléchissant la lumière étant formée à l'avance sur la totalité ou une partie d'une région, tout en décalant alternativement les éléments de plaque transparents d'une longueur prédéterminée dans la direction de la largeur de manière à former des parties saillantes ;
un processus de remplissage de résine pour remplir une région d'espace entre les parties saillantes adjacentes à l'aide d'une résine transparente ;
un processus de coupe pour couper les parties saillantes intégrées en remplissant la résine transparente de chacun des deux côtés du corps stratifié afin de fabriquer deux éléments matériels pour une paire de panneaux de commande de lumière séparés d'un corps principal stratifié ;
un processus d'aplanissement pour aplanir les deux faces d'extrémité de chacun des éléments matériels dans la direction de la largeur afin de fabriquer les deux panneaux de commande de lumière (11,12) ; et
un processus d'assemblage pour empiler et relier les deux panneaux de commande de lumière (11, 12) de manière à rendre les parties réfléchissant la lumière (13) des panneaux de commande de lumière respectifs orthogonales l'une par rapport à l'autre en vue plane,
dans lequel une partie de la région sur laquelle la partie réfléchissant la lumière est formée comporte une région servant de surface opposée de la partie saillante, et l'élément de plaque transparent et la résine transparente ont des indices de réfraction dont le rapport est défini de 0,9 à 1,1.

5. Procédé de fabrication d'un dispositif de formation d'images optiques comportant deux panneaux de commande de lumière (11, 12) ayant chacun une pluralité de parties réfléchissant la lumière (13) en forme de bande agencées en parallèle, les panneaux de commande de lumière (11, 12) étant empilés l'un sur l'autre de manière à rendre les parties réfléchissant la lumière (13) des panneaux de commande de lumière respectifs orthogonales l'une par rapport à l'autre en vue plane, le procédé étant **caractérisé en ce qu'**il comprend :
un processus de formation de corps stratifié pour former un corps stratifié en préparant une pluralité d'éléments de plaque transparents de deux types ayant des largeurs différentes, formés chacun d'un élément en verre ou en résine dure à haut point de fusion ayant une forme rectangulaire avec une petite largeur et une grande longueur en vue plane, la partie réfléchissant la lumière étant formée à l'avance sur la totalité ou une partie d'une région, et en empilant alternativement les éléments de plaque transparents des deux types tandis que les éléments de plaque transparents sont alignés d'un côté dans la direction de la largeur, les parties saillantes étant formées de l'autre côté dans la direction de la largeur ;
un processus de remplissage de résine pour remplir une région d'espace entre les parties saillantes adjacentes à l'aide d'une résine transparente ;
un processus de coupe pour couper les parties saillantes intégrées en remplissant la résine transparente, et pour séparer un corps principal stratifié afin de fabriquer au moins un élément de matériau pour le panneau de commande de lumière ;
un processus d'aplanissement pour fabriquer le panneau de commande de lumière en aplanissant les deux faces d'extrémité de l'élément de matériau dans la direction de la largeur ; et
un processus d'assemblage pour empiler et relier les deux panneaux de commande de lumière (11, 12) fabriqués en exécutant séquentiellement les processus, du processus de formation de corps stratifié au processus d'aplanissement, de manière à rendre les parties réfléchissant la lumière (13) des panneaux de commande de lumière respectifs orthogonales l'une par rapport à l'autre en vue plane, dans lequel une partie de la région sur laquelle la partie réfléchissant la lumière est formée comporte une région servant de surface opposée de la partie saillante, et l'élément de plaque transparent et la résine transparente ont des indices de réfraction dont le rapport est défini de 0,9 à 1,1.

6. Procédé de fabrication du dispositif de formation d'images optiques selon l'une des revendications 2 à 5, **caractérisé en ce qu'**au cours du processus de formation de corps stratifié, la pluralité d'éléments de plaque transparents sont reliés entre eux par un agent adhésif.

7. Procédé de fabrication du dispositif de formation d'images optiques selon la revendication 6, **caractérisé en ce que** l'agent adhésif est placé sur une région d'empilement de chacun des éléments de plaque transparents du corps stratifié à l'exception des deux parties d'extrémité dans la direction de la largeur.

8. Procédé de fabrication du dispositif de formation d'images optiques selon la revendication 6 ou 7, **caractérisé en ce que** l'agent adhésif est un ruban OCA.
